# EUROPEAN PATENT APPLICATION

(11) **EP 3 324 557 A1**
(43) Date of publication of application: **23.05.2018**
(21) Application number: 17202429.1
(22) Date of filing: 17.11.2017
(51) Int. Cl.: H04B 10/116, G01S 5/16

(54) **LIGHT FIXTURES AND/OR LIGHT FIXTURE INSTALLATIONS WITH DIFFERING VISIBLE LIGHT COMMUNICATION CAPABILITIES**

(30) Priority: 18.11.2016 US 201662424053 P
(71) Applicant: ABL IP Holding LLC, Atlanta, GA 30309 (US)
(72) Inventor: Mealey, Carter, Covington, GA Georgia 30016 (US); Michaelraj, Ashwin, Peachtree City, GA Georgia 30269 (US); Lu, Yenpao, Cumming, GA Georgia 30041 (US); Kashyap, Vinod, Atlanta, GA Georgia 30339 (US)
(74) Representative: Thompson, Andrew John

(57) **Abstract**

Lighting installations having improved visible light communication capabilities. A lighting installation includes a plurality of LED segments. The plurality of LED segments comprises at least a first LED segment, a second LED segment, and a third LED segment interposed between the first LED segment and the second LED segment. The lighting installation is configured to drive the first and second LED segments so as to emit light in modulation patterns having VLC codes different from each other and to drive the third LED segment to emit un-modulated light. In this way, the third LED segment physically separates the first and second LED segments from each other and prevents intermingling of their emitted light so that a mobile device can easily detect the different VLC codes of the first and second LED segments.

## Description

### CROSS REFERENCE TO RELATED APPLICATIONS

This application claims the benefit of U.S. Provisional Application Serial No. 62/424,053, filed November 18, 2016, entitled "Light Fixtures and/or Light Fixture Installations with Differing Visible Light Communication Capabilities," the entirety of which is hereby incorporated by this reference.

### FIELD OF THE INVENTION

The invention relates to lighting installations and/or light fixtures for lighting installations having improved visible light communication capabilities.

### BACKGROUND

Incorporation of visible light communication ("VLC") capabilities into light emitting diode ("LED") light fixtures is known. For example, light fixtures may be equipped with VLC capabilities that effectively convert the light fixtures into global positioning systems ("GPS"). Generally, light sources such as LEDs can be modulated (i.e., brightened and dimmed) at a high enough rate or frequency such that the modulated nature of the light is invisible or undetectable to the human eye but detectible by a camera on a smart mobile device, such as a smartphone or tablet. The modulation appears to the device as a pattern of light and dark lines, similar to a bar code, across the illuminated area of the modulating light source. A different modulation pattern may be used in each installed light fixture so as to create a unique pattern of light and dark lines ("VLC code") for each fixture. The VLC code is then decoded by the mobile device and converted into a unique number for a fixture. The unique numbers of the light fixtures can then be used by a mobile device, for example, as a GPS to direct a user to a desired area within a store in which the fixtures are installed. Additionally, the light fixtures can be used to track users within an area or a store in which the light fixtures are installed.

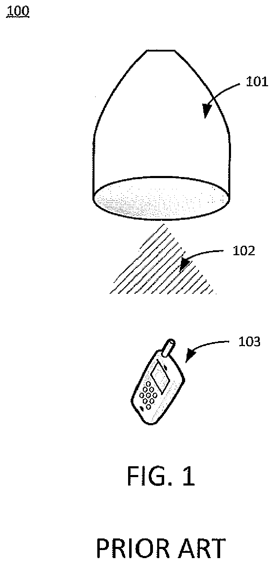

FIG.1 1 schematically depicts a lighting installation 100 having VLC capabilities. Lighting installation 100 includes a light fixture 101 that emits modulated light 102. Mobile device 103 detects, and can take action based on, the modulated light 102.

Successful use of VLC technology in light fixtures requires that a mobile device be able to isolate and discern the unique VLC codes of the fixtures. Oftentimes in such installations, different segments of LEDs along the length of a single fixture, or the LEDs within different fixtures, have different VLC codes to enable more precise global positioning. However, in such situations, the light emitted from the LEDs driven with one VLC code may mix with the light emitted from LEDs driven with a different VLC code, washing out the fidelity of the modulated VLC LED light and rendering it difficult for the device to read the unique VLC code for the fixture or segment. Hence, there is a need for a lighting installation designed to help prevent such light contamination.

### SUMMARY

Embodiments disclosed herein relate to light fixtures and/or light fixture installations having improved visible light communication capabilities. A lighting installation includes a plurality of LED segments. The plurality of LED segments comprises at least a first LED segment, a second LED segment, and a third LED segment interposed between the first LED segment and the second LED segment. The lighting installation is configured to drive the first and second LED segments so as to emit light in modulation patterns having VLC codes different from each other and to drive the third LED segment to emit un-modulated light. In this way, the third LED segment physically separates the first and second LED segments from each other and prevents intermingling of their emitted light so that a mobile device can easily detect the different VLC codes of the first and second LED segments.

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

### BRIEF DESCRIPTION OF THE DRAWINGS

FIG. 1 schematically depicts a prior art lighting system having VLC capabilities.
FIG. 2 depicts an exemplary lighting installation, according to certain embodiments of the present disclosure.
FIG. 3 is an enlarged bottom view of the lighting installation of FIG. 2.
FIG. 4 depicts an exemplary lighting installation, according to certain embodiments of the present disclosure.
FIG. 5 depicts an exemplary lighting installation, according to certain embodiments of the present disclosure.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

As discussed, successful use of VLC technology in light installations requires that a mobile device be able to isolate and discern the VLC codes being emitted from the fixtures. Isolating and discerning such unique codes is not an issue when an installation includes relatively small, discrete light fixtures (each driven with a unique VLC code) that are sufficiently spatially separated from each other in the installation.

But problems can arise when incorporating VLC technology into longer, linear fixtures (e.g., a single fixture or multiple adjacent fixtures aligned horizontally to run entire lengths of store aisles). Oftentimes in such installations, different segments of LEDs along the length of a single fixture or the LEDs within the different fixtures are driven and modulated to emit light having different patterns (and thus different VLC codes) to enable more precise global positioning. However, in such situations, the light emitted from the LEDs driven to have one VLC code may mix with the light emitted from LEDs driven to have a different VLC code, washing out the fidelity of the pulsating VLC LED light and rendering it difficult for the device to read the unique code for the fixture or segment.

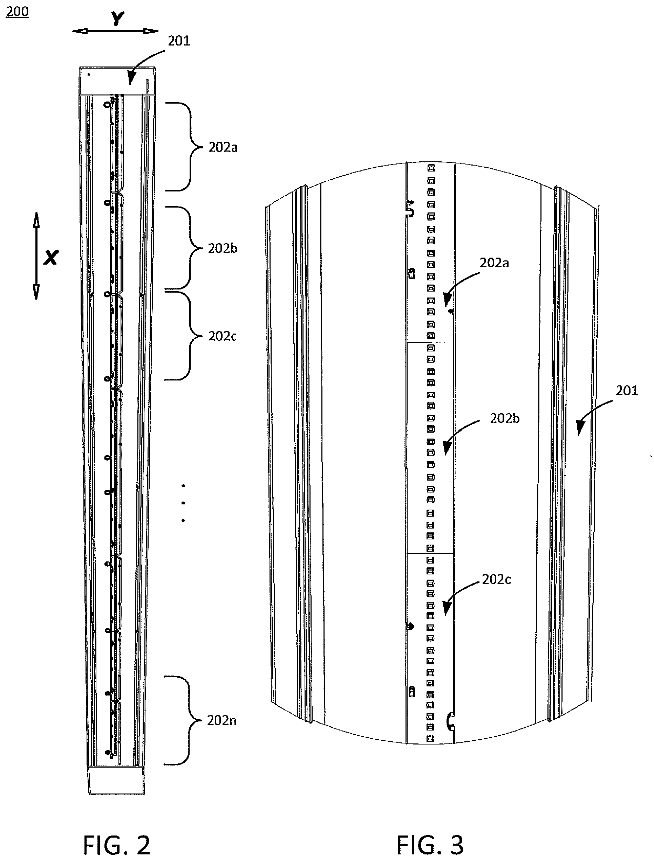

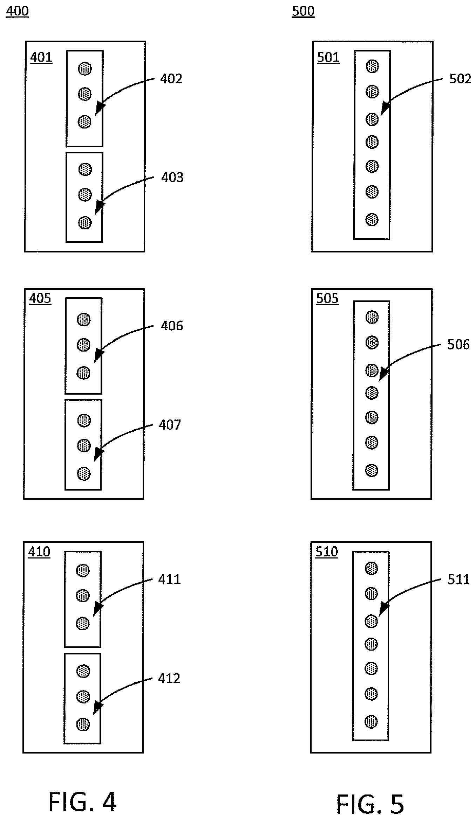

Accordingly, embodiments disclosed herein include lighting installations having differing LED segments, either within a fixture in the installation and/or between adjacent fixtures in the installation. In embodiments, the LED segments differ in that one or more LED segments is driven to emit modulated light having a VLC code ("VLC LED segment") and one or more of the other LED segments is driven with direct current to emit un-modulated light ("non-VLC LED segment"). The modulated nature of the light emitted by the VLC LED segments is detectible by a smart mobile device but undetectable to a human eye such that it appears substantially the same as the light emitted by the non-VLC LED segments. The differing VLC/non-VLC LED segments may be provided within a single light fixture (i.e., the light fixture includes at least one VLC LED segment and at least one non-VLC LED segment) (see, e.g., FIGS. 2-4) and/or in adjacent light fixtures (i.e., one fixture may have only VLC LEDs and an adjacent fixture only non-VLC LEDs) (see, e.g., FIG. 5).

In other embodiments, the LED segments are arranged in the installation such that one or more non-VLC LED segments is interposed between VLC LED segments to create a physical separation or "break" between the VLC LED segments. Any number of non-VLC LED segments may be interposed between VLC LED segments (either within a single fixture or between fixtures), and vice versa. At least some of the VLC LED segments may be driven to have differing modulation patterns and thus VLC codes different from those of other VLC LED segments in the installation. For example, in a lighting installation with three LED segments, a first LED segment may be a VLC LED segment driven to emit modulated light having a first VLC code, a second LED segment may be a VLC LED segment driven to emit modulated light having a second VLC code different from that of the first LED segment, and a third LED segment may be a non-VLC LED segment interposed between the first and second LED segments.

FIG. 2 depicts an exemplary lighting installation 200 provided with differing visible light communication capabilities, according to certain embodiments of the present disclosure. FIG. 3 is an enlarged bottom view of the lighting installation of FIG. 2. Lighting installation 200 includes a light fixture housing 201 and has a first dimension x and a second dimension *y* transverse the first dimension *x.* In the illustrated embodiment, the second dimension *y* is less than the first dimension *x,* thus resulting in a long linear installation 200. For example and by way only of example, the second dimension *y* may be substantially (or less than) a half, a third, a fourth, an eighth, a twelfth, or a sixteenth of the first dimension x.

LED segments 202a-n extend along the length (first dimension x) of the installation 200 and light fixture housing 201. The LED segments 202a-n may be a combination of VLC LED segments and non-VLC LED segments. In the illustrated embodiment, LED segment 202a is a VLC LED segment, LED segment 202b is a non-VLC LED segment, and LED segment 202c is a VLC LED segment driven to emit modulated light having a different VLC code than the VLC code of LED segment 202a, and so on. In such an embodiment, the non-VLC light emitted from LED segment 202b serves as a barrier or break between LED segments 202a and 202c to prevent the emitted, modulated light from LED segments 202a and 202c from mixing together and detrimentally impacting the fidelity of the VLC code of each.

Any number of non-VLC LED segments may be provided between adjacent VLC LED segments in a lighting installation. In some embodiments, the LED segments 202a-n may be provided in the lighting installation 200 such that adjacent LED segments 202a-n alternate in the use of VLC and non-VLC. Moreover, while FIG. 2 depicts the lighting installation 200 as formed of a single light fixture, any number of fixtures may be used to form the lighting installation 200 and any subset of LED segments 202a-n may be provided in such fixtures, as seen in FIGS. 4 and 5 and discussed further below.

The light fixtures and LED segments within such fixtures may be of any length. In some embodiments, each LED segment is four feet long or eight feet long. Multiple LED segments (VLC or non-VLC) may be driven by a single multi-channel driver. Alternatively, a dedicated driver may be used to drive a single LED segment. Moreover, while embodiments of the invention have been disclosed for use in linear light fixtures and installations, their use is not so limited. Rather, inclusion of differing VLC/non-VLC LED segments may be incorporated into fixtures and installations of any geometry, including, but not limited to, curved (e.g., round) and linear.

Further, in other embodiments, any combination of light fixtures (i.e., ones having all VLC LED segments, ones having all non-VLC LED segments, ones having a combination of VLC and non-VLC LED segments) may be used in an installation and positioned to ensure that the non-VLC LED segments provide the desired separation between the VLC LED segments. Such separation prevents light emitted from one VLC LED segment from mixing with light emitted from another VLC LED segment, at least to the extent that such mixing detrimentally impacts the integrity of the VLC code of the LED segment. However, the separation is not detectable by an observer. Rather, emitted light along the length of the installation will appear continuous and uniform to the observer.

FIG. 4 schematically depicts a lighting installation 400 formed with a plurality of light fixtures - light fixture 401, light fixture 405, and light fixture 410. While three light fixtures 401, 405, and 410 are shown, any number of light fixtures may be used in the lighting installation 400. Each light fixture includes at least one VLC LED segment and at least one non-VLC LED segment. For example, light fixture 401 includes VLC LED segment 402 and non-VLC LED segment 403. Light fixture 405 includes VLC LED segment 406 and non-VLC LED segment 407. Light fixture 410 includes VLC LED segment 411 and non-VLC LED segment 412. Obviously, a plurality of one or each type of LED segment (VLC and non-VLC) may be provided in one or each of light fixtures 401, 405, and 410.

VLC LED segments 402, 406, and 411 are driven to emit light with different VLC codes. Light fixtures 401, 405, and 410 are arranged such that the non-VLC LED segments 403, 407, and 412 are interposed between the VLC LED segments 402, 406, and 411. For example, light fixture 401 is positioned next to light fixture 405 such that non-VLC LED segment 403 is adjacent to VLC LED segment 406. Similarly, light fixture 405 is positioned next to light fixture 410 such that non-VLC LED segment 407 adjacent to VLC LED segment 411. Non-VLC LED segments 403,407, and 412 ensure that the mixing of light between VLC LED segments 402, 406, and 411 is minimized.

FIG. 5 schematically depicts a lighting installation 500 also formed with a plurality of light fixtures - light fixture 501, light fixture 505, and light fixture 510. While three light fixtures 501, 505, and 510 are shown, any number of light fixtures may be used in the lighting installation 500. In contrast to the installations of FIGS. 2 and 4, each light fixture of installation 500 includes either one or more VLC LED segments or one or more non-VLC LED segments, but not both types of LED segments. For example, light fixture 501 includes VLC LED segment 502, but no non-VLC LED segments. Light fixture 505 includes non-VLC LED segment 506, but no VLC LED segments. Finally, light fixture 510 includes VLC LED segment 511, but no non-VLC LED segments. VLC LED segments 502 and 511 are driven to emit light having different VLC codes. Light fixtures 501, 505, and 510 are positioned such that light fixture 505 is located between light fixtures 501 and 510, ensuring that the VLC light from VLC LED segments 502 and 511 of light fixtures 501 and 510 is separated by the non-VLC light from non-VLC LED segment 505 of light fixture 506. It will be obvious to one skilled in the art that lighting installations may be formed with any combination of the light fixtures disclosed herein.

The foregoing is provided for purposes of illustrating, explaining, and describing embodiments of the present invention. Further modifications and adaptations to these embodiments will be apparent to those skilled in the art and may be made without departing from the scope or spirit of the invention. Different arrangements of the components depicted in the drawings or described above, as well as components and steps not shown or described are possible. Similarly, some features and sub-combinations are useful and may be employed without reference to other features and sub-combinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications can be made without departing from the scope of the invention.

## Claims

1. A lighting installation comprising:
a first dimension and a second dimension transverse to the first dimension;
a first LED segment extending along a first portion of the first dimension, a second LED segment extending along a second portion of the first dimension different from the first portion, and a third LED segment extending along a third portion of the first dimension different from the first portion and the second portion and interposed between the first LED segment and the second LED segment,
wherein the lighting installation is configured to drive the first LED segment to emit light in a modulation pattern having a first VLC code such that the modulation pattern of the light emitted by the first LED segment is undetectable to a human eye but detectable by a mobile device;
wherein the lighting installation is configured to drive the second LED segment to emit light in a modulation pattern having a second VLC code such that the modulation pattern of the light emitted by the second LED segment is undetectable to a human eye but detectable by a mobile device, wherein the second VLC code is different from the first VLC code; and
wherein the lighting installation is configured to drive the third LED segment to emit un-modulated light.

2. The lighting installation of claim 1, wherein the first VLC code and the second VLC code are usable by the mobile device to track a location of a user of the mobile device.

3. The lighting installation of claim 1 or 2, further comprising at least one multi-channel driver, wherein the at least one driver is configured to drive the first LED segment, the second LED segment, and the third LED segment.

4. The lighting installation of claim 1 or 2, further comprising a first driver, a second driver, and a third driver, wherein the first driver is configured to drive the first LED segment, the second driver is configured to drive the second LED segment, and the third driver is configured to drive the third LED segment.

5. The lighting installation of any preceding claim, wherein lighting installation comprises at least one light fixture housing the first LED segment, the second LED segment, and the third LED segment.

6. The lighting installation of claim 5, wherein the at least one light fixture comprises a first light fixture and a second light fixture, wherein the first and third LED segments are housed in the first light fixture and the second LED segment is housed in the second light fixture, and optionally
wherein the first light fixture and the second light fixture are aligned along the first dimension of the lighting installation.

7. The lighting installation of claim 5, wherein the at least one light fixture comprises a first light fixture, a second light fixture, and a third light fixture, wherein the first LED segment is housed in the first light fixture, the second LED segment is housed in the second light fixture, and the third LED segment is housed in the third light fixture, and optionally
wherein the first light fixture, the second light fixture, and the third light fixture are aligned along the first dimension of the lighting installation.

8. The lighting installation of claim 5, wherein the at least one light fixture comprises a single light fixture housing the first LED segment, the second LED segment, and the third LED segment.

9. The lighting installation of any preceding claim, wherein the first dimension is larger than the second dimension, and/or
wherein at least one of the first LED segment, the second LED segment, and the third LED segment is at least four feet long.

10. The lighting installation of any preceding claim, wherein the first LED segment, the second LED segment, and the third LED segment are substantially linearly aligned along the first dimension so as to form a substantially continuous line of LEDs along the first dimension.

11. A linear light fixture comprising:
a housing having a length and a width, wherein the length is greater than the width;
a first LED segment extending along a first portion of the length of the housing; and
a second LED segment extending along a second portion of the length of the housing different from the first portion,
wherein the light fixture is configured to drive the first LED segment to emit light in a modulation pattern having a VLC code such that the modulation pattern of the light emitted by the first LED segment is undetectable to a human eye but detectable by a mobile device; and
wherein the light fixture is configured to drive the second LED segment to emit un-modulated light.

12. The linear light fixture of claim 11, further comprising a first driver and a second driver, wherein the first driver is configured to drive the first LED segment and the second driver is configured to drive the second LED segment, and/or
wherein at least one of the first LED segment and the second LED segment is at least four feet long.

13. The lighting installation of claim 11 or 12, wherein the first LED segment and the second LED segment are substantially linearly aligned along the first dimension so as to form a substantially continuous line of LEDs along the first dimension.

14. The light fixture of any of claims 11 to 13, further comprising a third LED segment extending along a third portion of the length of the housing different from the first portion and the second portion, wherein the second LED segment is interposed along the length of the housing between the first LED segment and the third LED segment and wherein the light fixture is configured to drive the third LED segment to emit light in a modulation pattern having a VLC code different from the VLC code of the first LED segment and such that the modulation pattern of the light emitted by the third LED segment is undetectable to a human eye but detectable by a mobile device, and optionally wherein the first LED segment, the second LED segment, and the third LED segment are substantially linearly aligned along the first dimension so as to form a substantially continuous line of LEDs along the first dimension.

15. A method of operating a lighting installation comprising:
a first dimension and a second dimension transverse to the first dimension; and
a first LED segment extending along a first portion of the first dimension, a second LED segment extending along a second portion of the first dimension different from the first portion, and a third LED segment extending along a third portion of the first dimension different from the first portion and the second portion and interposed between the first LED segment and the second LED segment, the method comprising:
a. driving the first LED segment to emit light in a modulation pattern having a first VLC code such that the modulation pattern of the light emitted by the first LED segment is undetectable to a human eye but detectable by a mobile device;
b. driving the second LED segment to emit light in a modulation pattern having a second VLC code such that the modulation pattern of the light emitted by the second LED segment is undetectable to a human eye but detectable by a mobile device, wherein the second VLC code is different from the first VLC code; and
c. driving the third LED segment to emit un-modulated.
